# FASCICULE DE BREVET EUROPEEN

(11) **EP 3 195 641 B1**
(45) Date de publication et mention de la délivrance du brevet: **20.11.2019**
(21) Numéro de dépôt: 15775399.7
(22) Date de dépôt: 18.09.2015
(51) Int. Cl.: H04W 12/04, H04W 12/08, H04L 29/06, H04W 12/06, G06F 21/57

(54) **PROCÉDÉ D'APPAIRAGE**
PAARUNGSVERFAHREN
PAIRING METHOD

(30) Priorité: 19.09.2014 FR 1458866
(43) Date de publication de la demande: 26.07.2017
(73) Titulaire: Bolignano, Dominique, 75017 Paris (FR)
(72) Inventeur: Bolignano, Dominique, 75017 Paris (FR)
(74) Mandataire: Novagraaf Technologies
(86) Numéro de dépôt international: PCT/EP2015/071480
(87) Numéro de publication internationale: WO 2016/042145

(56) Documents cités:
- WO-A2-2013/061296
- US-A1- 2010 115 279
- US-A1- 2014 052 532
- US-A1- 2014 258 724

## Description

### Domaine technique

La présente invention se rapporte à la sécurité des systèmes informatiques et plus particulièrement à l'appairage de clés en initialisation d'un protocole cryptographique.

### Etat de la technique

Dans le domaine de la sécurité informatique, on distingue les codes dit de confiance de ceux non dignes de confiance.

Un code est dit de confiance quand l'utilisateur/le développeur est confiant que le code installé sur un matériel va respecter une politique de sécurité ou une spécification qui contraint/limite généralement les comportements autorisés. Par exemple, ce code aura été vérifié par des méthodes formelles garantissant que son fonctionnement est conforme aux spécifications.

A contrario un code est non digne de confiance dans les autres cas. Le code a un comportement envisagé comme potentiellement non conforme à ce qu'il est censé faire. Ou ce qu'il est censé faire n'est pas conforme à ce qui est attendu. Cela peut arriver soit parce qu'il est mal écrit ou écrit par des acteurs auxquels il n'est pas possible de faire confiance, soit parce qu'il est attaqué, ou même mal configuré. Mais cela peut aussi être le cas s'il manque des informations sur le code lui-même, ou sur la manière avec laquelle il a était développé. En présence de code non digne de confiance dans un contexte de sécurité, il est assumé généralement une attitude pessimiste en supposant que le code en question peut utiliser tous les moyens dont il dispose pour faire le pire.

De la même façon un canal de communication est dit sûr s'il est physiquement sûr, ou s'il est sécurisé virtuellement.

Le canal de communication est physiquement sûr s'il est sécurisé par un contrôle physique qui interdit, généralement pas contruction, toute autre fonctionnalité (par exemple fuite d'information) que celle(s) voulue(s) pour ce moyen de communication. C'est un concept analogue à celui de code de confiance en considérant que le canal est une fonction informatique.

Et un canal de communication est sécurisé virtuellement s'il utilise un protocole cryptographique qui apporte certains éléments de sécurité. Par exemple, un VPN (en anglais « Virtual Private Network » - réseau privé virtuel) est un canal sécurisé virtuellement.

Pour initier un protocole cryptographique entre deux acteurs de manière à assurer entre eux certaines propriétés de sécurité (en général intégrité, et/ou authentification, et/ou confidentialité, ...) il faut d'abord passer par une configuration, appelée ici un appairage des acteurs, dans laquelle chacun dispose de certaines clés ou secrets spécifiques qui permettent d'établir une certaine correspondance. Par exemple, un premier acteur va devoir avoir une clé publique, et l'autre acteur la clé privée correspondante, ou deux acteurs vont partager une certaine clé symétrique. Pour permettre certains protocoles cryptographiques, il faut donc avoir réalisé au préalable une distribution de clés entre les acteurs, c'est-à-dire le bon appairage. Cet appairage peut être le résultat d'un protocole cryptographique de distribution de clés et de secrets. Mais ce dernier protocole aura dû lui même s'appuyer sur une distribution préalable des clés dont il a besoin pour fonctionner. Ainsi il faut s'appuyer au départ sur une distribution de clés ne s'appuyant pas sur des moyens cryptographiques et donc sur des canaux de communications sûrs ou sécurisés par contrôle. Cet appairage que nous appelons ici appairage physique, est généralement fait en lieu sûr ou en usine, ce qui est appelé « pre-issuance » par l'homme du métier. Elle permet d'installer une ou des clés racines qui serviront de noyau pour installer d'autres clés. C'est par exemple le cas des architectures à base de TSM (en anglais « Trusted Secure Manager»), dans lequel on va placer une clé racine dans chaque dispositif en utilisant à une étape une protection physique de la distribution (par exemple à l'aide d'un HSM (en anglais « Hardware Security Module » - module matériel de sécurité)).

Toutefois, cet appairage physique réalisé en lieu sûr implique de lourde contrainte matérielle et/ou logistique dans la distribution aux différents utilisateurs.

WO2013/061296 A2 décrit un procédé d'appairage nécessitant l'installation préalable de clés dans chacun des dispositifs communicants.

Il existe donc un réel besoin de pouvoir réaliser des appairages palliant ces défauts, inconvénients et obstacles de l'art antérieur, en particulier d'un procédé permettant d'appairer sans passer par un appairage physique préalable en lieu sûr pour réduire les coûts et améliorer l'expérience utilisateur.

### Description de l'invention

Pour résoudre un ou plusieurs des inconvénients cités précédemment, un procédé d'appairage par transmission d'au moins une clé racine entre un premier et un deuxième modules de confiance, chacun étant installé dans un dispositif différent, le dispositif sur lequel est installé le premier module comprenant une interface homme-machine pour communiquer avec un utilisateur, et les deux dispositifs possédant des moyens de communication permettant de les relier entre eux par un canal de communication non sûr, comprend :
- réception via l'interface homme-machine, pendant la phase de démarrage, d'une commande mettant le dispositif du premier module de confiance dans un mode de fonctionnement tel que le premier module de confiance prend le contrôle d'au moins une partie des moyens de communication du premier dispositif pour les mettre dans un mode de fonctionnement sûr et prend le contrôle de l'interface homme-machine ;
- établissement d'une communication temporairement sûre entre le premier et le deuxième modules de confiance ;
- présentation sur l'interface homme-machine d'un statut signalant la mise en place de la communication sûre ;
- réception via l'interface homme-machine d'une commande d'acceptation d'appairage ;
- échanges d'au moins une clé racine entre les deux modules à travers le canal de communication temporairement sûr pour réaliser l'appairage.

Des caractéristiques ou des modes de réalisation particuliers, utilisables seuls ou en combinaison, sont :
- la commande d'acceptation d'appairage comprend une donnée permettant l'authentification de l'utilisateur par l'un des modules de confiance ;
- la donnée est transmise au deuxième module de confiance par le premier module de confiance ;
- une des deux zones de confiance contient préalablement une ou plusieurs clés utilisées pour réaliser l'appairage ; et/ou
- un troisième module de confiance étant installé sur un troisième dispositif ne comprenant pas d'interface homme-machine, le procédé d'appairage ayant été réalisé entre le premier et le deuxième module de confiance, le procédé est répété entre le premier et le troisième module de confiance en utilisant des clés associées au premier appairage de sorte qu'un appairage entre le deuxième et le troisième module de confiance est réalisé par transitivité.

Un autre aspect de l'invention se rapporte à un programme d'ordinateur à installer dans un ordinateur, comprenant des instructions pour mettre en œuvre les étapes du procédé d'appairage tel que défini ci-dessus lors d'une exécution du programme par une unité de calcul dudit appareil.

### Brève description des figures

L'invention sera mieux comprise à la lecture de la description qui suit, faite uniquement à titre d'exemple, et en référence aux figures en annexe dans lesquelles :
- La figure 1 représente un système pouvant mettre en œuvre un procédé selon un mode de réalisation de l'invention ;
- La figure 2 représente un ordinogramme d'un procédé d'appairage selon un mode de réalisation ; et
- La figure 3 représente un système mettant en œuvre une variante du procédé de la figure 2.

### Modes de réalisation

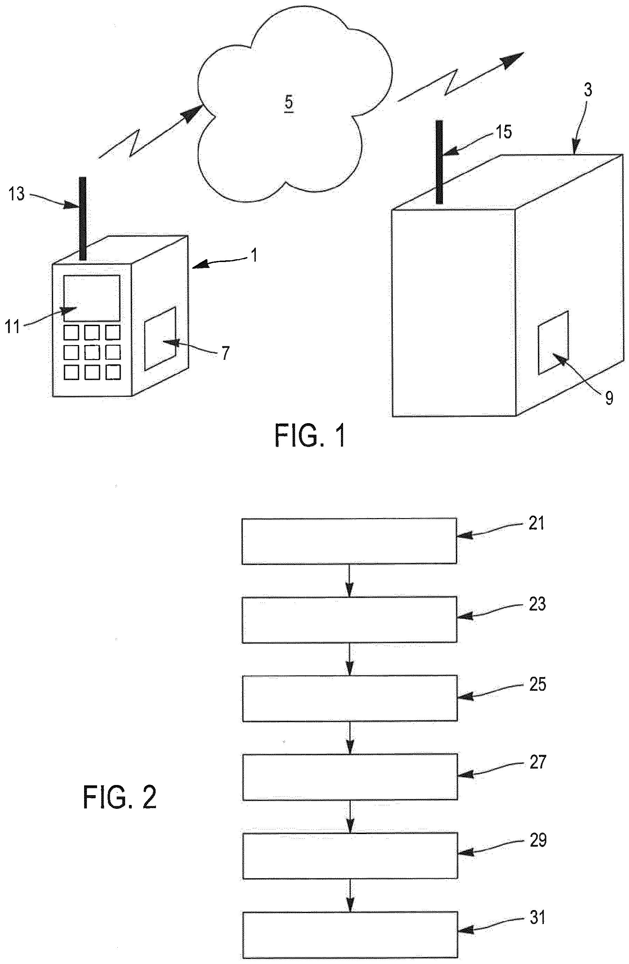

En référence à la figure 1, deux dispositifs 1, 3 sont reliés par un canal de communication 5. Par exemple, les deux dispositifs sont deux ordinateurs et/ou téléphones portables connectés par une liaison de donnée de type internet.

Chaque dispositif 1, 3 comporte un module de confiance 7, 9 respectivement. Ce module de confiance peut être, par exemple, un circuit électronique spécifique, une combinaison d'un calculateur dédié et de son logiciel de commande ou un logiciel spécifique destiné à être exécuté sur le calculateur général du dispositif 1, 3. Le(s) logiciel(s) seront préférentiellement stockés dans des mémoires accessibles en lecture seule afin qu'un tiers ne puisse pas les modifier. Ces modules de confiance ont été particulièrement testés et validés afin de garantir un fonctionnement conforme aux spécifications.

Par ailleurs, au moins un des dispositifs, par exemple le dispositif 1, comprend une interface homme-machine 11 permettant une communication avec un utilisateur de ce dispositif.

Les dispositifs 1, 3 comprennent également des moyens de communication 13, 15 permettant d'établir une communication au travers du canal de communication 5.

Le module de confiance 7 du dispositif 1 est adapté pour prendre ponctuellement le contrôle (exclusif) de l'interface homme-machine 11 (ou d'une partie de cette interface qui peut suffire pour une certaine interaction avec l'utilisateur, par exemple une fenêtre de sécurité) ainsi que d'au moins une partie des moyens de communication 13. Par exemple, les moyens de communication comprennent classiquement une partie matérielle (modem, antenne, etc.) et une partie logicielle de traitement du signal et de gestion des protocoles. Le module de confiance peut utiliser la partie matérielle tout en remplaçant la partie logicielle par une partie logicielle qui lui est propre et dans laquelle il a confiance, ou en utilisant la partie logicielle ou matérielle problématique dans un cadre particulier qui permettra d'avoir confiance. Ainsi, par exemple la pile de communication (en anglais « stack modem ») pour un lien entre le module de confiance appelé TEE (« Trusted Execution Environment » en anglais - environnement d'exécution sûr) dans le monde des téléphones mobiles et la carte SIM va être utilisée dans un mode dégradé que la zone de confiance peut contrôler suffisamment pour réaliser l'échange de clés avec le niveau de sécurité voulue (par exemple en ne lançant pas la fonction de communication du modem, et en faisant redémarrer la pile de communication en fin de phase d'appairage pour la forcer à oublier les secrets qu'on lui a confié sans lui faire confiance).

De la même façon, il peut prendre le contrôle du matériel composant l'interface homme-machine 11 pour le piloter avec ses propres modules logiciels.

Les deux dispositifs 1, 3 réalisent alors un appairage de la façon suivante, figure 2.

Le lancement de la procédure d'appairage est réalisé par l'utilisateur qui, via l'interface homme-machine, envoie, étape 21, une commande mettant le dispositif 1 dans un mode de fonctionnement tel que son module de confiance 7 prend le contrôle d'au moins une partie de ses moyens de communication 13 pour les mettre dans un mode de fonctionnement sûr et prend également le contrôle de l'interface homme-machine 11. Il est à noter que ce mode de fonctionnement va temporairement limiter les fonctionnalités du dispositif 1 accessibles à l'utilisateur. En effet, pour limiter les risques de contournement de sécurité, l'utilisateur n'aura pas accès sur son interface homme-machine 11 à d'autres applications.

En particulier, cet appairage est réalisé pendant une phase de fonctionnement particulière et dégradée du dispositif 1, phase généralement placée dans la phase de démarrage (« boot » en anglais), et que l'utilisateur sait reconnaître. Ainsi, par exemple, l'utilisateur peut provoquer ce fonctionnement particulier par une séquence de touches ou réponses particulières lors de la phase de démarrage.

Le module de confiance 7 ayant pris le contrôle d'au moins une partie des moyens de communication 13 va établir, étape 23, une communication sûre avec le dispositif 3 et plus particulièrement son module de confiance 9. Cette communication sûre est temporaire car elle cessera dès que le module de confiance redonnera le contrôle des moyens de communication 13 au dispositif 1, dans son mode de fonctionnement habituel.

Lorsque le module de confiance 7 a établi la communication sûre avec le module de confiance 9, il en informe l'utilisateur par un message, étape 25.

L'utilisateur valide, étape 27, la mise en place de cette communication sûre en envoyant une commande d'acceptation d'appairage. Par exemple, l'écran présente un message « Une communication sécurisée est en place avec le dispositif 3. Acceptez-vous d'appairer votre dispositif avec ce dispositif 3 ? » Et deux boutons « OK » et « Annuler » permettent d'accepter, respectivement refuser, l'appairage.

Sur validation par l'utilisateur, les deux modules 7, 9 échangent alors, étape 29, les clés et/ou secrets via la communication sûre pour réaliser l'appairage des deux appareils.

Puis, étape 31, la communication sûre est fermée et le module de confiance 7 abandonne le contrôle de l'interface homme-machine 11 et des moyens de communication 13.

Dans une première variante, l'acceptation de l'appairage, étape 27, par l'utilisateur n'est acceptée que si l'utilisateur s'authentifie auprès d'un des modules de confiance 7, 9. Par exemple, l'utilisateur doit taper un code secret qui est vérifié par l'un des modules de confiance 7, 9. Cela peut être le premier module de confiance 7 mais, de préférence, cette vérification est réalisée par le module de confiance 9 du deuxième dispositif 3.

Les clés d'appairage peuvent être stockées dans n'importe quel lieu sûr accessible par un lien de communication sûr par au moins un des modules de confiance. Par exemple, le deuxième dispositif peut être un serveur bancaire dont le module de confiance a accès à un HSM. Cependant, dans une seconde variante, au moins une partie de ces clés et secrets peut être stockée directement dans l'un des deux modules de confiance 7, 9.

Dans une troisième variante, le procédé d'appairage peut être utilisé entre deux dispositifs sans interface homme-machine. Pour cela, un dispositif avec interface homme-machine est utilisé comme intermédiaire.

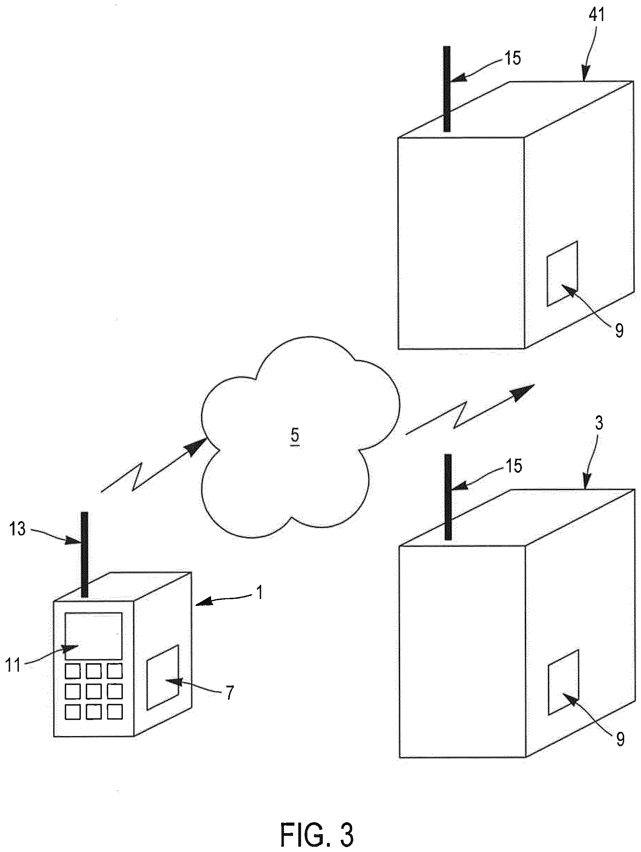

Ainsi, la figure 3 représente les deux dispositifs 1, 3 décrit précédemment et un troisième dispositif 41 similaire au dispositif 3 en ce qu'il n'a pas d'interface homme-machine mais dispose d'un canal de communication avec le dispositif 1. Le procédé d'appairage ayant été réalisé entre les modules de confiance 7, 9, le procédé est répété entre le module de confiance 7 et le module de confiance du dispositif 41 en utilisant des clés associées au premier appairage de sorte qu'un appairage entre le deuxième et le troisième module de confiance est réalisé par transitivité.

Un exemple d'utilisation du procédé décrit est lorsque le dispositif 1 est un mobile, la première zone de confiance est le TEE du mobile ou un de ses domaines/containers. L'écran est celui de l'interface téléphonique utilisateur (en anglais « Telephony User Interface » - TUI). La deuxième zone de confiance est par exemple un élément de sécurité (« Secure Element » en anglais - SE) ou un de ses domaines de sécurité et cette deuxième zone de confiance est déjà personnalisé (appairé avec un serveur par exemple). L'appairage permettra d'appairer les deux zones de confiance, ou bien la première et le serveur (par transitivité). On aura ainsi réalisé une fonction généralement réalisée par un TSM pour mobile sans besoin de pré chargement de clé dans le mobile.

L'invention a été illustrée et décrite en détail dans les dessins et la description précédente. Celle-ci doit être considérée comme illustrative et donnée à titre d'exemple et non comme limitant l'invention a cette seule description. De nombreuses variantes de réalisation sont possibles.

Ainsi, l'exemple ci-dessus montre que les deux dispositifs peuvent se confondre physiquement dans un même boitier de téléphone. Ainsi le premier et de deuxième dispositif peuvent se confondre dans un unique appareil comportant deux modules de confiance distincts ne communiquant entre eux, dans un mode de fonctionnement classique, que par un lien de communication non sécurisé. Cette notion de deux dispositifs est ainsi utilisée dans ce document dans un unique but de clarté.

Dans les revendications, le mot « comprenant » n'exclue pas d'autres éléments et l'article indéfini « un/une » n'exclue pas une pluralité.

## Revendications

1. Procédé d'appairage par transmission d'au moins une clé racine entre un premier et un deuxième modules de confiance (7, 9), chacun étant installé dans un dispositif différent (1, 3), le dispositif (1) sur lequel est installé le premier module (7) comprenant une interface homme-machine (11) pour communiquer avec un utilisateur, et les deux dispositifs possédant des moyens de communication (13, 15) permettant de les relier entre eux par un canal de communication (5) non sûr, le procédé comprenant :
• réception (21) via l'interface homme-machine, pendant la phase de démarrage, d'une commande mettant le dispositif du premier module de confiance dans un mode de fonctionnement tel que le premier module de confiance prend le contrôle d'au moins une partie des moyens de communication du premier dispositif pour les mettre dans un mode de fonctionnement sûr et prend le contrôle de l'interface homme-machine ;
• établissement (23) d'une communication temporairement sûre entre le premier et le deuxième modules de confiance ;
• présentation (25) sur l'interface homme-machine d'un statut signalant la mise en place de la communication sûre ;
• réception (27) via l'interface homme-machine d'une commande d'acceptation d'appairage ;
• échange (29) d'au moins une clé racine entre les deux modules à travers le canal de communication temporairement sûr pour réaliser l'appairage.

2. Procédé selon la revendication 1, **caractérisé en ce que** la commande d'acceptation d'appairage comprend une donnée permettant l'authentification de l'utilisateur par l'un des modules de confiance.

3. Procédé selon la revendication 2, **caractérisé en ce que** la donnée est transmise au deuxième module de confiance par le premier module de confiance.

4. Procédé selon l'une quelconque des revendications précédentes, **caractérisé en ce qu'**une des deux zones de confiance contient préalablement une ou plusieurs clés utilisées pour réaliser l'appairage.

5. Procédé selon l'une quelconque des revendications précédentes, **caractérisé en ce qu'**un troisième module de confiance étant installé sur un troisième dispositif ne comprenant pas d'interface homme-machine, le procédé d'appairage ayant été réalisé entre le premier et le deuxième module de confiance, le procédé est répété entre le premier et le troisième module de confiance en utilisant des clés associées au premier appairage de sorte qu'un appairage entre le deuxième et le troisième module de confiance est réalisé par transitivité.

6. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en œuvre du procédé d'appairage selon l'une au moins des revendications 1 à 5

## Patentansprüche

1. Verfahren zur Paarbildung durch Übertragung mindestens eines Wurzelschlüssels zwischen einem ersten und einem zweiten vertrauenswürdigen Modul (7, 9), die jedes in einer unterschiedlichen Vorrichtung (1, 3) installiert sind, wobei die Vorrichtung (1), an der das erste Modul (7) installiert ist, eine Mensch-Maschine-Schnittstelle (11) umfasst, um mit einem Benutzer zu kommunizieren, und wobei die zwei Vorrichtungen Kommunikationsmittel (13, 15) besitzen, die es ermöglichen, dieselben über einen nicht sicheren Kommunikationskanal (5) miteinander zu verbinden, wobei das Verfahren umfasst:
- Empfangen (21), während der Startphase über die Mensch-Maschine-Schnittstelle, eines Befehls, der die Vorrichtung des ersten vertrauenswürdigen Moduls in einen solchen Betriebsmodus setzt, dass das erste vertrauenswürdige Modul die Steuerung mindestens eines Teils der Kommunikationsmittel der ersten Vorrichtung übernimmt, um dieselben in einen sicheren Betriebsmodus zu setzen, und die Steuerung der Mensch-Maschine-Schnittstelle übernimmt;
- Herstellen (23) einer temporär sicheren Kommunikation zwischen dem ersten und dem zweiten vertrauenswürdigen Modul;
- Wiedergeben (25) eines Status auf der Mensch-Maschine-Schnittstelle, der den Aufbau der sicheren Kommunikation signalisiert;
- Empfangen (27) eines Paarbildungs-Annahmebefehls über die Mensch-Maschine-Schnittstelle;
- Austauschen (29) von mindestens einem Wurzelschlüssel zwischen den zwei Modulen durch den temporär sicheren Kommunikationskanal, um die Paarbildung auszuführen.

2. Verfahren nach Anspruch 1, **dadurch gekennzeichnet, dass** der Paarbildungs-Annahmebefehl Daten umfasst, die die Authentifizierung des Benutzers durch eines der vertrauenswürdigen Module ermöglichen.

3. Verfahren nach Anspruch 2, **dadurch gekennzeichnet, dass** die Daten vom ersten vertrauenswürdigen Modul an das zweite vertrauenswürdige Modul übertragen werden.

4. Verfahren nach einem der vorstehenden Ansprüche, **dadurch gekennzeichnet, dass** eine der zwei vertrauenswürdigen Zonen vorab einen oder mehrere Schlüssel enthält, die verwendet werden, um die Paarbildung auszuführen.

5. Verfahren nach einem der vorstehenden Ansprüche, **dadurch gekennzeichnet, dass** wenn ein drittes vertrauenswürdiges Modul an einer dritten Vorrichtung installiert ist, die keine Mensch-Maschine-Schnittstelle umfasst, wenn das Paarbildungsverfahren zwischen dem ersten und dem zweiten vertrauenswürdigen Modul ausgeführt wurde, das Verfahren zwischen dem ersten und dem dritten vertrauenswürdigen Modul unter Verwendung der Schlüssel, die der ersten Paarbildung zugeordnet sind, wiederholt wird, sodass eine Paarbildung zwischen dem zweiten und dem dritten vertrauenswürdigen Modul durch Transitivität ausgeführt wird.

6. Computerprogrammprodukt, das aus einem Kommunikationsnetz heruntergeladen werden kann und/oder auf einem computerlesbaren Träger aufgezeichnet ist und/oder von einem Prozessor ausgeführt werden kann, **dadurch gekennzeichnet, dass** es Programmcodeanweisungen für die Umsetzung des Paarbildungsverfahrens nach mindestens einem der Ansprüche 1 bis 5 umfasst.

## Claims

1. Pairing method by transmission of at least one root key between a first and a second trusted module (7, 9) each being installed in a different device (1, 3), the device (1) whereon the first module (7) is installed comprising a man-machine interface (11) for communicating with a user, and the two devices having communication means (13, 15) enabling connection therebetween by a non-secure communication channel (5), the method comprising:
- receiving (21) via the man-machine interface, during the start-up phase, a command setting the device of the first trusted module in an operating mode such that the first trusted module takes control of at least one part of the communication means of the first device, in order to set same in a secure operating mode and takes control of the man-machine interface;
- establishing (23) a temporary secure communication between the first and the second trusted modules;
- displaying (25) on the man-machine interface a status indicating the establishment of the secure communication;
- receiving (27) via the man-machine interface a pairing acceptance command;
- exchanging (29) at least one root key between the two modules via the temporarily secure communication channel in order to perform the pairing.

2. Method according to claim 1, **characterised in that** the pairing acceptance command comprises a datum enabling the user to be authenticated by one of the trusted modules.

3. Method according to claim 2, **characterised in that** the datum is transmitted to the second trusted module by the first trusted module.

4. Method according to any of the preceding claims, **characterised in that** one of the two trusted zones previously contains one or more keys used to perform the pairing.

5. Method according to any of the preceding claims, **characterised in that**, with a third trusted module being installed on a third device not comprising any man-machine interface, the pairing method having been carried out between the first and the second trusted modules, the method is repeated between the first and the third trusted modules using keys associated with the first pairing such that a pairing between the second and the third trusted modules is performed by transitivity.

6. Computer program product capable of being downloaded from a communication network and/or saved on a computer-readable medium and/or capable of being executed by a processor, **characterised in that** it comprises program code instructions for implementing the pairing method according to at least one of claims 1 to 5.
